(19)

Europäisches Patentamt
European Patent Office
Office européen des brevets

(11)  EP 3 476 970 A1

(12)  EUROPEAN PATENT APPLICATION
published in accordance with Art. 153(4) EPC

(43) Date of publication:
01.05.2019  Bulletin 2019/18

(21) Application number: 17820241.2

(22) Date of filing: 28.06.2017

(51) Int Cl.:
C23C 8/18 (2006.01)          B01J 23/26 (2006.01)
B01J 23/28 (2006.01)        B01J 23/652 (2006.01)
B01J 23/86 (2006.01)        C22C 19/05 (2006.01)
C22C 30/02 (2006.01)        C23C 18/12 (2006.01)
C23C 18/38 (2006.01)        C23C 28/00 (2006.01)
C23C 28/04 (2006.01)

(86) International application number:
PCT/JP2017/023824

(87) International publication number:
WO 2018/003887 (04.01.2018 Gazette 2018/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.06.2016  JP 2016127963

(71) Applicant: Nippon Steel & Sumitomo Metal
Corporation
Tokyo 100-8071 (JP)

(72) Inventors:
• MASAKI, Yasuhiro
Tokyo 100-8071 (JP)
• TAKEDA, Kiyoko
Tokyo 100-8071 (JP)
• OSUKI, Takahiro
Tokyo 100-8071 (JP)

(74) Representative: Zimmermann & Partner
Patentanwälte mbB
Postfach 330 920
80069 München (DE)

(54)  **AUSTENITIC ALLOY MATERIAL AND AUSTENITIC ALLOY PIPE**

(57)  An austenitic alloy material is provided that includes a base metal having a surface, and a film containing chromium oxide having a thickness of 0.1 to 50 $\mu$m on at least one portion of the surface. A chemical composition at a depth position in the film at which the Cr concentration is highest contains, by atom%, 50% or more of Cr as a proportion occupied among components excluding O, C and N. The chemical composition of the base metal consists of, by mass%, C: 0.001 to 0.6%, Si: 0.01 to 5.0%, Mn: 0.1 to 10.0%, P: 0.08% or less, S: 0.05% or less, Cr: 15.0 to 55.0%, Ni: 30.0 to 80.0%, N: 0.001 to 0.25%, O: 0.02% or less, Mo: 0 to 20.0%, Cu: 0 to 5.0%, Co: 0 to 5.0%, W: 0 to 10.0%, Ta: 0 to 6.0%, Nb: 0 to 5.0%, Ti: 0 to 1.0%, B: 0 to 0.1%, Zr: 0 to 0.1%, Hf: 0 to 0.1%, Al: 0 to 1.0%, Mg: 0 to 0.1 %, and Ca: 0 to 0.1%, the balance being Fe and impurities.

FIGURE 1

**Description**

TECHNICAL FIELD

The present invention relates to an austenitic alloy material and an austenitic alloy pipe.

BACKGROUND ART

With a view towards the future realization of a hydrogen energy-based society, it is necessary to develop a process that produces hydrogen, which is not dependent on fossil fuels, that is, a process that uses clean energy that is not accompanied by generation of carbon dioxide. Methods that can be considered for hydrogen production include an IS process that incorporates thermal decomposition of sulfuric acid and hydrogen iodide, and high-temperature water electrolysis (water vapor electrolysis). The IS process is also called chemical hydrogen production, and is suitable for mass hydrogen production. The principle of the IS process is as described below, and the process includes the decomposition of sulfuric acid and hydrogen iodide at a high temperature, and the reactions of these substances progress by means of a catalyst such as platinum.

$H_2SO_4 \rightarrow SO_3+H_2O$ (thermal decomposition of sulfuric acid: 300°C or more)

$SO_3 \rightarrow SO_2+1/2O_2$ (decomposition of $SO_3$: $\geq$ 850°C)

$2HI \rightarrow H_2+I_2$ (decomposition of hydrogen iodide: 400°C)

$SO_2+I_2+2H_2O \rightarrow 2HI+H_2SO_4$ (Bunsen reaction: 200°C)

$H_2O \rightarrow H_2+1/2O_2$ (overall reaction)

The main issues concerning the present process include improving the corrosion resistance of materials used for facilities/plants and improving the performance of the catalyst. Since strong acids at a high temperature are used for the reactions, corrosion and deterioration of the equipment and pipes is severe. In particular, since a sulfuric acid decomposition portion is exposed to an extremely strong corrosive environment, corrosion cannot be avoided if ordinary metal materials are used. With regard to the process that uses a catalyst, the activity and durability of the catalyst itself is insufficient, and together with development of a catalyst material, chemical engineering efforts directed towards increasing the contact efficiency of the gas phase or liquid phase are proceeding.

Non-Patent Document 1 discloses that the corrosion resistance performance of corrosion-resistant alloys such as Alloy 600 and Alloy 800 under a high-temperature sulfuric acid or $SO_3$ environment is investigated for the purpose of use as plant material for an IS system.

Further, Patent Document 1 discloses that a stainless steel pipe has coking resistance and carburizing resistance, and that includes a Cr depleted zone at the surface and in which an oxide scale layer that mainly contains Cr is provided on the outer side (surface side) of the Cr depleted zone. In addition, Non-Patent Document 1 discloses that the application of a ceramic such as SiC and a glass lining material is also investigated. It is stated that the corrosion resistance of these materials is favorable, with almost no corrosion arising when these materials are used.

LIST OF PRIOR ART DOCUMENTS

PATENT DOCUMENT

Patent Document 1: JP2005-48284A

NON PATENT DOCUMENT

Non-Patent Document 1: Nobuyuki Tanaka et al., ZAIRYO-TO-KANKYO, 55 (2006), pp. 320-324

SUMMARY OF INVENTION

TECHNICAL PROBLEM

In the case of using a high-alloy material such as Alloy 600 or Alloy 800 as the material for an apparatus in an environment that includes sulfuric acid, the corrosion resistance decreases as the amount of high-alloy material used increases, and eventually corrosion resistance is not obtained at all. On the other hand, in the case of an alloy material that is provided with an oxide film, which mainly contains chromium, corrosion resistance can be expected based on the barrier property of the film. However, in a high-temperature sulfuric acid environment such as is used in the IS process, the corrosion resistance of the base metal itself is insufficient. A ceramic or a glass lining material, which has high corrosion resistance, suffers from a high material cost, and has the possibility of corrosion occurring at connection portions because it is difficult to make a connection of the material. Another problem is that because a ceramic is liable to become embrittled, which leads to the possibility of the ceramic being damaged, it is difficult to use ceramic as a material for apparatuses for use in plants.

An objective of the present invention is to provide a low-cost austenitic alloy material and austenitic alloy pipe that are excellent in corrosion resistance in harsh environments such as environments in which the austenitic alloy material and austenitic alloy pipe are exposed to sulfur oxide containing sulfuric acid, or a high-temperature vapor or high-temperature solution containing hydrochloric acid or the like.

SOLUTION TO PROBLEM

The present invention has been made to solve the aforementioned problems, and the gist of the present invention is an austenitic alloy material and an austenitic alloy pipe described hereunder.

(1) An austenitic alloy material that includes a base metal having a surface, and a film containing chromium oxide having a thickness of 0.1 to 50 $\mu$m on at least one portion of the surface, wherein:

a chemical composition at a depth position in the film at which a Cr concentration is highest contains, by atom%, 50% or more of Cr as a proportion occupied among components excluding O, C and N; and
a chemical composition of the base metal consists of, by mass%:

C: 0.001 to 0.6%,
Si: 0.01 to 5.0%,
Mn: 0.1 to 10.0%,
P: 0.08% or less,
S: 0.05% or less,
Cr: 15.0 to 55.0%,
Ni: 30.0 to 80.0%,
N: 0.001 to 0.25%,
O: 0.02% or less,
Mo: 0 to 20.0%,
Cu: 0 to 5.0%,
Co: 0 to 5.0%,
W: 0 to 10.0%,
Ta: 0 to 6.0%,
Nb: 0 to 5.0%,
Ti: 0 to 1.0%,
B: 0 to 0.1%,
Zr: 0 to 0.1%,
Hf: 0 to 0.1%,
Al: 0 to 1.0%,
Mg: 0 to 0.1%,
Ca: 0 to 0.1%, and
the balance: Fe and impurities.

(2) The austenitic alloy material according to (1) above, wherein the chemical composition of the base metal contains, by mass%, one or more elements selected from:

Mo: 0.01 to 20.0%,
Cu: 0.01 to 5.0%,
Co: 0.01 to 5.0%,
W: 0.01 to 10.0%,
Ta: 0.01 to 6.0%,
Nb: 0.01 to 5.0%,
Ti: 0.01 to 1.0%,
B: 0.001 to 0.1%,
Zr: 0.001 to 0.1%,
Hf: 0.001 to 0.1%,

Al: 0.01 to 1.0%,
Mg: 0.0005 to 0.1%, and
Ca: 0.0005 to 0.1%.

(3) The austenitic alloy material according to (1) or (2) above, wherein one or more elements selected from Cu, V, W, Mo and precious metal elements is contained in the film.

(4) The austenitic alloy material according to any one of (1) to (3) above, wherein a chemical composition in an outer layer of the film satisfies formulas (i) and (ii) below:

$$[Cu]_S + [V]_S + [W]_S + [Mo]_S + [PM]_S \geq 30 \quad ... (i)$$

$$[Cr]_S \leq 70 \quad ... (ii)$$

where, with respect to each symbol in the formulas above, each element in the outer layer of the film represents a proportion (atom%) occupied by the corresponding element among components excluding O, C and N, and PM means precious metal elements.

(5) The austenitic alloy material according to any one of (1) to (4) above, wherein the chemical composition at a depth position at which the Cr concentration is highest satisfies formula (iii) below:

$$0.5 \leq [Cu]_P + [V]_P + [W]_P + [Mo]_P + [PM]_P \leq 50 \quad ... (iii)$$

where, with respect to each symbol in the above formula, each element at a depth position at which the Cr concentration is highest represents a proportion (atom%) occupied by the corresponding element among components excluding O, C and N, and PM means precious metal elements.

(6) The austenitic alloy material according to any one of (1) to (5) above, wherein the film contains a complex oxide containing Cr and one or more elements selected from Cu, V, W and Mo.

(7) The austenitic alloy material according to any one of (1) to (6) above, wherein the film has an action that decomposes $SO_3$.

(8) The austenitic alloy material according to any one of (1) to (7) above, wherein an $SO_3$ decomposition rate is $8.0 \times 10^{-5}$ g/cm$^2$/min or more under conditions of an $SO_3$ supply rate per unit area of 0.0071 g/cm$^2$/min, and a reaction temperature of 850°C.

(9) The austenitic alloy material according to any one of (1) to (8) above, wherein an $SO_3$ decomposition rate is $1.0 \times 10^{-3}$ g/cm$^2$/min or more under conditions of an $SO_3$ supply rate per unit area of 0.0071 g/cm$^2$/min, and a reaction temperature of 850°C.

(10) An austenitic alloy pipe made from an austenitic alloy material according to any one of (1) to (9) above.

ADVANTAGEOUS EFFECTS OF INVENTION

According to the present invention, an austenitic alloy material and an austenitic alloy pipe that exhibit excellent corrosion resistance in a high temperature and harsh environment containing a sulfur oxide such as sulfuric acid or a hydrogen halide or the like can be obtained.

BRIEF DESCRIPTION OF DRAWINGS

Figure 1 is a view illustrating a concentration profile of a Test No. 3.
Figure 2 is a view illustrating a concentration profile of a Test No. 10.
Figure 3 is a view illustrating a concentration profile of a Test No. 13.

DESCRIPTION OF EMBODIMENTS

The present inventors conducted intensive studies directed towards obtaining an alloy material that exhibits excellent corrosion resistance in an environment in which a strong acid is used at a high temperature, such as in the IS process, specifically, an environment that contains $SO_3$ vapor at a temperature that is more than 800°C, and as a result obtained the following findings.

The present inventors found that a film containing chromium oxide provided on a surface exhibits catalytic activity with respect to the decomposition of a sulfur oxide that is a step in the IS process. Here, the term "sulfur oxide" includes sulfuric acid ($H_2SO_4$), sulfurous acid ($H_2SO_3$), $SO_x$ such as $SO_3$ and $SO_2$, and $S_2O_8$.

In particular, because the corrosion resistance progressively improves as the aforementioned decomposition activity increases, it is considered that there is a correlation between corrosion resistance and a catalytic property. It is surmised that this is because $SO_3$ is decomposed by a catalytic action and becomes $SO_2$, and hence the corrosiveness of the sulfur oxide is reduced.

In addition, if Cu, V, W or Mo or the like is contained in the film in addition to chromium oxide, or if Cu, V, W, Mo or a precious metal element or the like is contained in the outer layer side of the film, the catalytic action of the film is strengthened by the participation of the intrinsic catalytic action of these elements, and as a result the corrosion resistance improves.

Based on the above findings, the present inventors succeed in developing an austenitic alloy material that not only exhibits high corrosion resistance as a material for equipment such as pipes in a chemical process that uses a sulfur oxide or a hydrogen halide at a high temperature such as the IS process, but also has a catalytic function and can contribute to chemical production.

The present invention was made based on the findings described above. The respective requirements of the present invention are described in detail hereunder.

1. Chemical composition of base metal

The reasons for limiting each element are as follows. Note that, the symbol "%" with respect to content in the following description represents "mass percent".

C: 0.001 to 0.6%

C is an element that combines with Cr and precipitates as Cr carbides at crystal grain boundaries, and thus has an effect of raising the high temperature strength of an alloy. However, if an excessive amount of C is contained, the toughness deteriorates. Further, Cr depleted zones are formed at the crystal grain boundaries, and intergranular corrosion resistance may be impaired. Therefore, the C content is set in the range of 0.001 to 0.6%. The C content is preferably 0.002% or more. Further, the C content is preferably not more than 0.45%, and more preferably is not more than 0.3%.

Si: 0.01 to 5.0%

Si has a strong affinity to oxygen, and therefore has an action that evenly forms a film that is mainly composed of Cr. However, if an excessive amount of Si is contained, the weldability deteriorates and the micro-structure also becomes unstable. Therefore, the Si content is set to 0.01 to 5.0%. The Si content is preferably 0.03% or more. Further, the Si content is preferably not more than 3.0%, and more preferably is not more than 2.0%.

Mn: 0.1 to 10.0%

Mn is an element that has an effect of improving deoxidation and workability. Further, because Mn is an austenite former, it is possible to substitute Mn in lieu of a part of Ni that is expensive. However, if an excessive amount of Mn is contained, in the case of forming a chromium oxide film by oxidation of the base metal, not only does Mn inhibit formation thereof, but there is also a risk that Mn will cause the workability and weldability of the base metal to deteriorate. Therefore, the Mn content is set in the range of 0.1 to 10.0%. The Mn content is preferably not more than 5.0%, and more preferably is not more than 2.0%.

P: 0.08% or less

S: 0.05% or less

P and S segregate at the crystal grain boundaries and cause a deterioration in the hot workability. Therefore, the contents of P and S are preferably reduced as much as possible. However, because excessive reduction of these elements leads to higher costs, a P content of not more than 0.08% and an S content of not more than 0.05% are allowable. The P content is preferably not more than 0.05%, and more preferably is not more than 0.04%. Further, the S content is preferably not more than 0.03%, and more preferably is not more than 0.015%.

Cr: 15.0 to 55.0%

Cr is an element that is centrally responsible for the corrosion resistance of an austenitic alloy. $Cr_2O_3$ is generated by oxidation or corrosion of the base metal or the like, and exhibits a catalytic property and corrosion resistance. However, if an excessive amount of Cr is contained, the Cr will cause a decrease in pipe producibility and a decrease in structural stability at a high temperature during use. Therefore, the Cr content is set in the range of 15.0 to 55.0%. The Cr content is preferably 20.0% or more, and more preferably is 22.0% or more. Further, to prevent a deterioration in the structural stability together with workability, the Cr content is preferably not more than 35.0%, and more preferably is not more than 33.0%.

Ni: 30.0 to 80.0%

Ni is an element that is necessary in order to obtain a stable austenitic structure in accordance with the Cr content. Further, in a case where C penetrates into the steel, Ni acts to decrease the penetration speed. However, if an excessive amount of Ni is contained, not only does it lead to higher costs, but also results in a deterioration in producibility. Therefore, the Ni content is set in the range of 30.0 to 80.0%. The Ni content is preferably not more than 70.0%, more preferably is not more than 60.0%, and further preferably is not more than 50.0%.

N: 0.001 to 0.25%

N is an effective element for improving the high temperature strength. However, if an excessive amount of N is contained, the N will significantly inhibit workability. Therefore, the N content is set in the range of 0.001 to 0.25%. The N content is preferably 0.002% or more, and preferably is not more than 0.20%.

O: 0.02% or less

O (oxygen) is an element that is present as an impurity. If the O content is more than 0.02%, a large amount of oxide-based inclusions will be present in the steel, and not only will workability decrease, but the oxide-based inclusions will be a cause of steel pipe surface defects. Therefore, the O content is set to not more than 0.02%.

Mo: 0 to 20.0%

Mo is an effective element for improving the high temperature strength as a solid-solution strengthening element, and is an element that enhances corrosion resistance in a super strong acid environment that contains a sulfuric acid or a hydrochloric acid. In particular, it is considered that Mo creates an MoS film with sulfur to promote corrosion resistance. Therefore, Mo may be contained as required. However, if an excessive amount of Mo is contained, because Mo promotes precipitation of sigma phase, the Mo will lead to a deterioration in weldability and workability. Therefore, the Mo content is set in the range of 0 to 20.0%. The Mo content is preferably not more than 15.0%, and more preferably is not more than 10.0%. To obtain the aforementioned effects, the Mo content is preferably 0.01% or more, more preferably is 0.5% or more, and further preferably is more than 3.0%.

Cu: 0 to 5.0%

Cu is an element that is effective for stabilizing the austenite phase and also enhancing high temperature strength. Furthermore, similarly to Mo, Cu is an element that improves corrosion resistance in a super strong acid environment that contains a sulfuric acid or a hydrochloric acid. Therefore, Cu may be contained as required. However, if an excessive amount of Cu is contained, the hot workability will be noticeably decreased. Therefore, the Cu content is set to 5.0% or less. To obtain the aforementioned effects, the Cu content is preferably set to 0.01% or more. The Cu content is preferably not less than 0.5%, and is preferably not more than 3.5%. Within the aforementioned range, Cu exerts corrosion resistance, and workability is also secured. The Cu content is more preferably not less than 1.0%, and is more preferably not more than 3.0%.

Co: 0 to 5.0%

Co can be substituted in lieu of a part of Ni to stabilize the austenite phase. Therefore, Co may be contained as required. However, if an excessive amount of Co is contained, the hot workability will be noticeably decreased. Therefore, the Co content is set to 5.0% or less. The Co content is preferably not more than 3.0%. To obtain the aforementioned effect, the Co content is preferably set to 0.01% or more.

W: 0 to 10.0%

Ta: 0 to 6.0%

W and Ta are each an element that is effective for enhancing high temperature strength as a solid-solution strengthening element, and therefore may be contained as required. However, if an excessive amount of these elements is contained, not only will these elements cause the workability to deteriorate, but these elements will also inhibit the structural stability. Therefore, the W content is set to 10.0% or less, and the Ta content is set to 6.0% or less. The W content is preferably not more than 8.0%. Further, the Ta content is preferably not more than 2.5%, and more preferably is not more than 2.0%. To obtain the aforementioned effect, preferably the content of at least one element among W and Ta is 0.01% or more.

Nb: 0 to 5.0%

Ti: 0 to 1.0%

Nb and Ti are elements which, even when added in trace amounts, contribute significantly to improving high temperature strength, ductility and toughness, and therefore may be contained as required. However, if contained in an excessive amount, these elements cause the workability and weldability to deteriorate. Therefore, the Nb content is set to 5.0% or less, and the Ti content is set to 1.0% or less. To obtain the aforementioned effects, preferably the content of at least one element among Nb and Ti is 0.01% or more.

B: 0 to 0.1%

Zr: 0 to 0.1%

Hf: 0 to 0.1%

B, Zr and Hf are each an effective element for strengthening grain boundaries and improving hot workability and high temperature strength characteristics, and therefore may be contained as required. However, if contained in an excessive amount, these elements cause the weldability to deteriorate. Therefore, the content of each of B, Zr and Hf is made 0.1% or less. To obtain the aforementioned effects, the content of one or more elements selected from B, Zr and Hf is preferably 0.001% or more.

Al: 0 to 1.0%

Mg: 0 to 0.1%

Ca: 0 to 0.1%

Al, Mg and Ca are each an effective element for improving hot workability, and therefore may be contained as required. However, if contained in an excessive amount, these elements cause the weldability to deteriorate. Therefore, the Al content is set to 1.0% or less, and the content of each of Mg and Ca is set to 0.1 % or less. The Al content is preferably not more than 0.6%, and the content of each of Mg and Ca is preferably not more than 0.06%. To obtain the aforementioned effect, preferably one or more elements selected from Al: 0.01% or more, Mg: 0.0005% or more, and Ca: 0.0005% or more is contained. Further, the respective contents of Mg and Ca are more preferably not less than 0.001%.

In the chemical composition of the base metal of the austenitic alloy material and austenitic alloy pipe of the present invention, the balance is Fe and impurities.

In this case, the term "impurities" refers to components which, during industrial production of the metal alloy, are mixed in from raw material such as ore or scrap or due to various factors in the production process, and which are allowed within a range that does not adversely affect the present invention.

2. Film

The austenitic alloy material and austenitic alloy pipe according to the present invention include a film containing chromium oxide on at least one portion of a surface of the base metal. Chromium oxide is an oxide that is mainly composed of chromium, and for example is chromia ($Cr_2O_3$) or chromium hydroxide (Cr(OH)3).

It is necessary for the chemical composition at a depth position at which the Cr concentration is highest (hereunder, also referred to as "highest Cr depth position") in the aforementioned film to contain, by atom%, 50% or more of Cr as a proportion occupied by Cr among components excluding O, C and N. By a portion that contains 50% or more of Cr being present in the film, it is possible to obtain an oxide film that is compact and has a high shielding property. In order to further improve corrosion resistance by improving compactness and catalytic properties, the Cr content at the highest Cr depth position is preferably made 70% or more, and more preferably is 90% or more.

Further, chromium oxide has a decomposition property as a catalyst with respect to sulfur oxides. Therefore, the higher that the Cr content in the film is, the more that the catalytic performance increases, and the more that the decomposition efficiency improves. As described in the foregoing, a positive correlation is observed between corrosion resistance and the decomposition property. It is surmised that this is probably because, at the film surface, $SO_3$, which has strong corrosiveness is decomposed and becomes $SO_2$, which has mild corrosiveness, and therefore the corrosiveness with respect to not only the film but also the base metal decreases.

The thickness of the aforementioned film is set in the range of 0.1 to 50 $\mu$m. If the thickness is less than 0.1 $\mu$m, the effect of a barrier property can hardly be observed. On the other hand, if the thickness is more than 50 $\mu$m, the accumulated amount of stress inside the film increases, and cracks and peeling are liable to occur. As a result, it is easy for sulfur oxide and hydrogen halide to penetrate the film, which leads to a decrease in the corrosion resistance. The thickness of the chromium oxide film is preferably not less than 0.5 $\mu$m, and is preferably not more than 20 $\mu$m, and more preferably is not more than 10 $\mu$m.

One or more elements selected from Cu, V, W and Mo (in the following description, these metallic elements may collectively be represented by "M") and precious metal elements (including Pt, Pd, Ag, Re, Ru and the like; hereunder these elements may collectively be represented by "PM") may be contained in the film. Because these elements have a catalytic property similarly to chromium oxide, by containing these elements the catalytic decomposition property with respect to sulfur oxide of the film itself improves, and as a result the corrosion resistance is strengthened.

PM is contained as a metal in the film. On the other hand, although M may be contained as a metal, M may also be contained as a hydroxide or an oxide. Specifically, M may be contained in the film as CuO, $Cu_2O$, CuOH, $Cu(OH)_2$, $MoO_3$, $Mo(OH)_6$, $WO_3$, $W(OH)_6$ or the like. Further, M and PM may be present in separate layers or may be dispersed in the film that contains Cr as a main component. In addition, M may be present by substituting M in lieu of a part of chromium in chromium oxide.

Further, M may form a complex oxide with chromium in the film. Examples of the complex oxide include $CuCr_2O_4$, $CuCrO_2$, $VCrO_4$, $WCrO_4$, $MoCrO_4$ and $Mo_2(CrO_4)_3$.

In addition, M and/or PM may be present in a manner in which the M and/or PM are laminated in an upper layer or a lower layer with respect to a layer that is mainly composed of chromium oxide. In this case, PM will be present as a metal. On the other hand, M may be present as a metal, may be present as an oxide, or may be present as a complex oxide with chromium.

As described above, because M and PM have an effect that enhances a catalytic decomposition property, M and PM are preferably concentrated on the outer layer side of the film. Specifically, it is desirable that the chemical composition of the outer layer of the film satisfies the following formulas (i) and (ii):

$$[Cu]_S + [V]_S + [W]_S + [Mo]_S + [PM]_S \geq 30 \quad \ldots (i)$$

$$[Cr]_S \leq 70 \quad \ldots (ii)$$

where, with respect to each symbol in the formulas above, each element in the outer layer of the film represents a proportion (atom%) occupied by the corresponding element among components excluding O, C and N, and PM means precious metal elements.

The form in which M and/or PM concentrate on the outer layer side of the film is also not particularly limited, and a layer containing M and/or PM may be formed as an upper layer on a layer that is mainly composed of chromium oxide, or the film may have a graded composition in which the concentration of M and/or PM increases progressively towards the outer layer side of the film.

M and/or PM may be contained at the highest Cr depth position. That is, at the highest Cr depth position, M and/or PM may be dispersed in chromium oxide or may be present as a complex oxide with chromium. However, as described above, because it is necessary that the Cr content at the highest Cr depth position is 50% or more, it is desirable for the contents of M and PM at the highest Cr depth position to satisfy the following formula (iii):

$$0.5 \leq [Cu]_P + [V]_P + [W]_P + [Mo]_P + [PM]_P \leq 50 \quad ... (iii)$$

where, with respect to each symbol in the above formula, each element at a depth position at which the Cr concentration is highest represents a proportion (atom%) occupied by the corresponding element among components excluding O, C and N, and PM means precious metal elements.

Note that, in the present invention, measurement of the composition in the outer layer of the film and at the highest Cr depth position is performed by depth analysis using XPS, AES, SIMS or the like that is combined with $Ar^+$ sputtering or the like. Here, the term "outer layer" means a region of 10 to 30 nm from the outermost surface of the film, and an average value of measurement results within the aforementioned region is used as the chemical composition of the outer layer. Further, the highest Cr depth position is identified from a concentration profile in the depth direction of Cr. Note that, the Cr concentration may sometimes be highest in the outer layer of the film, and in such a case the outer layer and the highest Cr depth position will match. Further, in a case where a plurality of highest Cr depth positions exist, the depth position that is nearest to the base metal among the plurality of highest Cr depth positions is adopted as the highest Cr depth position.

Thereafter, in the outer layer and at the highest Cr depth position, the concentration of all metallic elements contained in the film is determined, and the concentration of each of the metallic elements is calculated as a proportion (atom%) that the corresponding metallic element occupies among the components excluding O, C and N. Here, apart from Cr, Cu, V, W, Mo and precious metal elements, in some cases the metallic elements contained in the film in the present invention include, in addition to Ni and Fe that are the principal elements in the base metal, trace quantities of Si, Ti, Al, Mn, Nb and the like.

Although the thickness of the film may be determined by direct observation using a transmission electron microscope (TEM) or a scanning electron microscope (SEM), the thickness is preferably determined based on an XPS, AES, or SIMS concentration profile obtained by the aforementioned measurement. In the case of an XPS, AES, or SIMS concentration profile, specifically, at a peak of O that is nearest to the base metal side, a position at which the concentration is one half of the highest concentration of O on the base metal side of the peak is determined as being the boundary portion between the film and the base metal, and the length from the film surface to the aforementioned boundary portion is taken to be the thickness of film. It is desirable to perform measurement of the composition and thickness of the film at a plurality of places, and to adopt the average values thereof. Further, with regard to the respective micro-structures constituting the film, the micro-structures can be identified by using XRD or Raman spectrometry.

3. Catalytic performance ($SO_3$ decomposition activity)

The austenitic alloy material and the austenitic alloy pipe that include the aforementioned film on at least one portion of the base metal surface preferably have a catalytic activity for decomposition of sulfur oxides including sulfuric acid. By having a decomposing action, the corrosion resistance of the base metal improves, and by being used as pipe material or the like in a chemical process in which decomposition of sulfur oxide is included, such as the IS process, the austenitic alloy material and austenitic alloy pipe can contribute to enhancement of the decomposition efficiency as a process.

Although no particular limitations are set with respect to the degree of $SO_3$ decomposition activity which the austenitic alloy material and austenitic alloy pipe according to the present invention have, preferably the $SO_3$ decomposition rate under conditions of an $SO_3$ supply rate per unit area of 0.0071 $g/cm^2/min$ and a reaction temperature of 850°C is $8.0 \times 10^{-5}$ $g/cm^2/min$ or more. The $SO_3$ decomposition rate is more preferably $5.0 \times 10^{-4}$ $g/cm^2/min$ or more, and further preferably is $1.0 \times 10^{-3}$ $g/cm^2/min$ or more, and particularly preferably is $2.0 \times 10^{-3}$ $g/cm^2/min$ or more. The $SO_3$ decomposition rate ($g/cm^2/min$) means a value obtained by dividing the $SO_3$ decomposition amount (g/min) under the aforementioned conditions by the reaction area, that is, the film area ($cm^2$) which can come in contact with gas.

Note that, the $SO_3$ supply rate is calculated as follows: $SO_3$ concentration (g/L) at normal temperature $\times$ flow rate (L/min)/reaction area. The term "reaction area" refers to an area which is covered by the film containing chromium oxide and which can come in contact with reactant gas. Above the aforementioned 0.0071 $g/cm^2/min$, the reaction approaches a zero-order reaction, or so-called "reaction control". Therefore, when evaluating the $SO_3$ decomposition rate, a supply rate of 0.0071 $g/cm^2/min$ or more may be adopted.

Although a method for measuring the $SO_3$ decomposition rate is not limited, the measurement can be performed as follows. An inert gas such as nitrogen or argon containing $SO_3$ gas of a certain concentration is circulated as a reactant gas at a constant speed inside a tubular specimen in a manner such that the gas is not discharged therefrom, the temperature is raised to 850°C, the concentration of $SO_2$ and/or $O_2$ generated by decomposition of $SO_3$ is determined, the decomposition amount (g/min) is calculated by multiplying by the gas flow rate, and the resultant value is divided by the reaction area. Although the $SO_3$ concentration is not limited, from the viewpoint of measurement accuracy and ease of handling, the $SO_3$ concentration is preferably set to around 2 to 20 vol.%. It suffices to appropriately set the flow rate in accordance with the $SO_3$ concentration so that the $SO_3$ supply rate becomes 0.0071 $g/cm^2/min$ or more.

In this case, the austenitic alloy material according to the present invention includes not only plate-like material and tube-like material, but also includes granular material and mesh-like material. By disposing granular or mesh-like austenitic alloy material in the flow path of a reactant gas, the area of contact between the film having the alloy material and the reactant gas can be increased, thereby making it possible to increase the $SO_3$ decomposition amount.

4. Production method

The conditions for producing the austenitic alloy material and the austenitic alloy pipe according to the present invention are not particularly limited. For example, in the case of obtaining an austenitic alloy pipe, it suffices to form the austenitic alloy material into a desired steel pipe shape such as the shape of a seamless pipe or a welded pipe or the like by means such as melting, casting, hot working, cold working and welding. Further, the austenitic alloy material may be formed into a desired steel pipe shape by techniques such as powder metallurgy or centrifugal casting.

A method for forming the film containing chromium oxide on the base metal surface is also not limited. For example, the film can be formed by causing components such as Cr that are contained in the base metal to diffuse or be exposed on the surface by thermal oxidation or corrosion (including etching). In addition, the film can also be formed by imparting Cr and M and/or PM from the outside by a method such as coating or vapor deposition. It is also possible to combine two or more kinds of these methods. Note that, after the aforementioned film formation, as necessary a heat treatment can be performed to increase the adherence of the film or to form complex oxides between M and Cr, or to increase the crystallinity of oxide particles constituting the film and improve the catalytic ability.

A method for forming a layer containing M and/or PM as an upper layer with respect to a layer composed mainly of chromium oxide and a method for forming a film having a graded composition such that the concentration of M and/or PM increases progressively toward the outer layer side are also not particularly limited, and for example a method such as coating or vapor deposition can be used. In particular, in the case of forming a film containing PM, the PM can be carried on the surface of the film by depositing a solution containing a metal chloride compound such as platinic chloride or palladium chloride on a chromium oxide film, and thereafter performing a reduction treatment at 500°C under a hydrogen atmosphere.

Further, in the case of forming a film containing an element such as Cu or V, a solution containing a compound such as copper nitrate or vanadium nitrate can be similarly deposited on a chromium oxide film, and a heat treatment can be performed under an appropriate atmosphere.

Hereunder, the present invention is described more specifically by way of examples, although the present invention is not limited to the following examples.

EXAMPLES

Various alloys having the chemical compositions shown in Table 1 were melted in a high-frequency heating vacuum furnace, and then subjected to hot forging, hot rolling and cold rolling by conventional methods to produce austenitic alloy pipes that each had an external diameter of 20 mm and a wall thickness of 2 mm. Next, the austenitic alloy pipes were subjected to a solution treatment for 30 minutes in a temperature range of 1100 to 1200°C.

Formation of a film containing chromium oxide was performed by three kinds of methods, namely, two kinds of methods that are described hereunder and a method that combined the following two kinds of methods.

A) When performing the aforementioned solution (heat) treatment, steam (1 to 10 vol.%) was caused to mix into the atmosphere to thereby oxidize the base metal and form a film (Test Nos. 1 to 3, 16 to 19, 21, 23 to 26, 28, 29).
B) After the aforementioned solution (heat) treatment, a film was formed by a sol-gel coating process so as to have a desired film composition (mixed oxide of $Cr_2O_3$ and a metal oxide MO). A sol solution for coating was prepared by dissolving a metal nitride, a metal acetate, or a metal alkoxide represented by $M(OC_nH_{2n+1})_m$ in dehydrated alcohol, and as necessary adding a polymerization promoting catalyst such as nitric acid and a stabilizer such as diethanolamine (Test Nos. 5 to 7, 14, 22).

In the case of method B, the composition of the film was adjusted by mixing $Cr_2O_3$ and respective sol solutions of oxides selected from Mo, Cu, W and V at a predetermined ratio. Formation of the film was performed as follows. The mixed sol solution was deposited by a dipping process on the entire surface of the pipe, and was gelatinized by drying at 100°C. Next, a heat treatment was performed in an oxidative atmosphere at 450°C to remove water, and furthermore organic matter was evaporated and combusted, and crystallization was performed to thereby form a film composed mainly of chromium oxide on the inner surface of the austenitic alloy pipe. The film thickness was adjusted by performing the aforementioned sol-gel coating multiple times. Note that, with respect to Test No. 7, after the aforementioned heat treatment in an oxidative atmosphere at 450°C, a heat treatment was further performed at 850°C to form a film containing a complex oxide ($CuCr_2O_4$).

In addition, with regard to some specimens that are indicated by "A+B" in Table 2, a film containing an oxide of PM or M was formed on a chromium oxide film formed by method A. Specifically, in Test Nos. 4 and 20, after depositing a solution containing platinic chloride or palladium chloride on a chromium oxide film, a reduction treatment was performed at 500°C under a hydrogen atmosphere to thereby cause PM to be carried on the film surface.

Further, in Test Nos. 10, 11, 12 and 15, a sol solution prepared as described above by dissolving a metal nitride, a metal acetate, or a metal alkoxide represented by $M(OC_nH_{2n+1})_m$ in dehydrated alcohol, and as necessary adding a polymerization promoting catalyst such as nitric acid and a stabilizer such as diethanolamine was applied onto a chromium oxide film formed by method A. Next, a heat treatment was performed in an oxidative atmosphere at 450°C to thereby form the contents of the sol solution on the chromium oxide film as a metal oxide MO.

With regard to Test No. 8, after the aforementioned heat treatment in an oxidative atmosphere at 450°C, a further heat treatment was performed at 850°C in an argon atmosphere containing 0.1 vol.% of steam, and thus a complex oxide ($CuCrO_2$) was formed on the chromium oxide film.

In Test No. 9, a sol solution containing CuO was applied onto a chromium oxide film formed by method A, the sol solution was subjected to drying, and thereafter a reduction treatment was performed at 500°C under a 100% hydrogen atmosphere to form the metal Cu on the chromium oxide film.

In Test No. 13, after applying CuO by method B onto a chromium oxide film formed by method A, a complex oxide ($CuCr_2O_4$) was formed on the chromium oxide film by atmospheric firing at a high temperature.

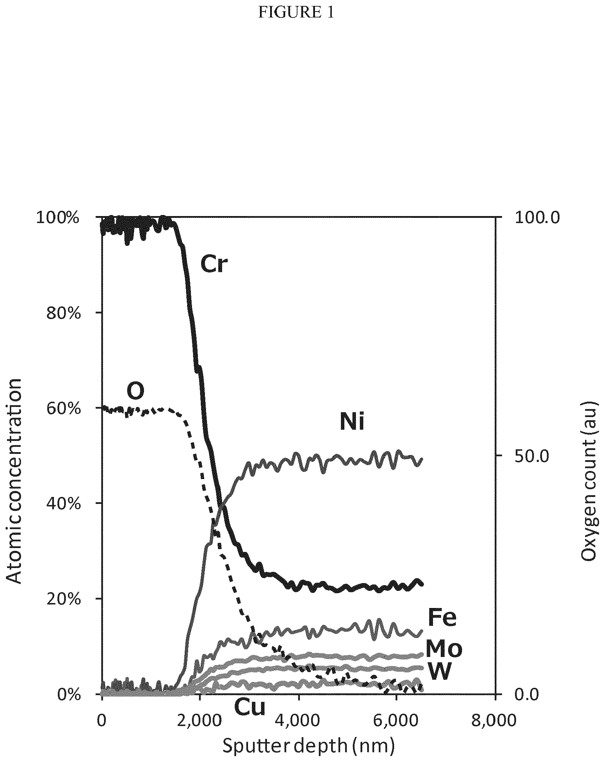

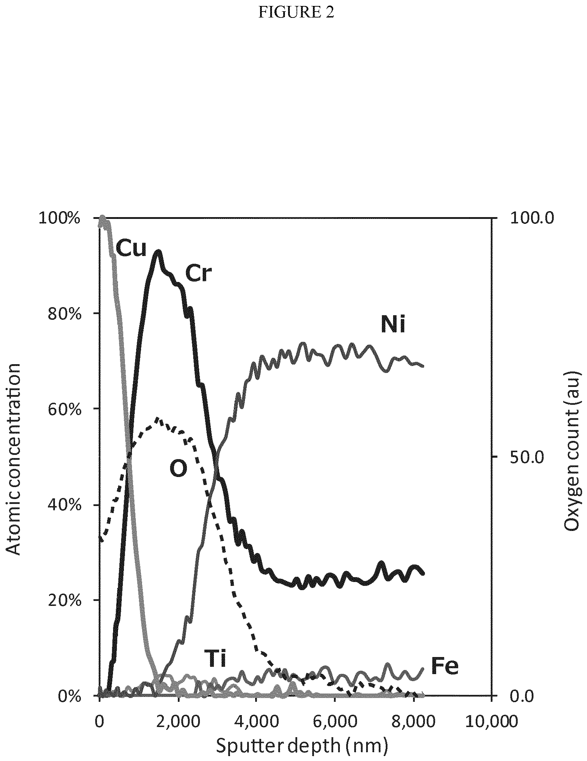

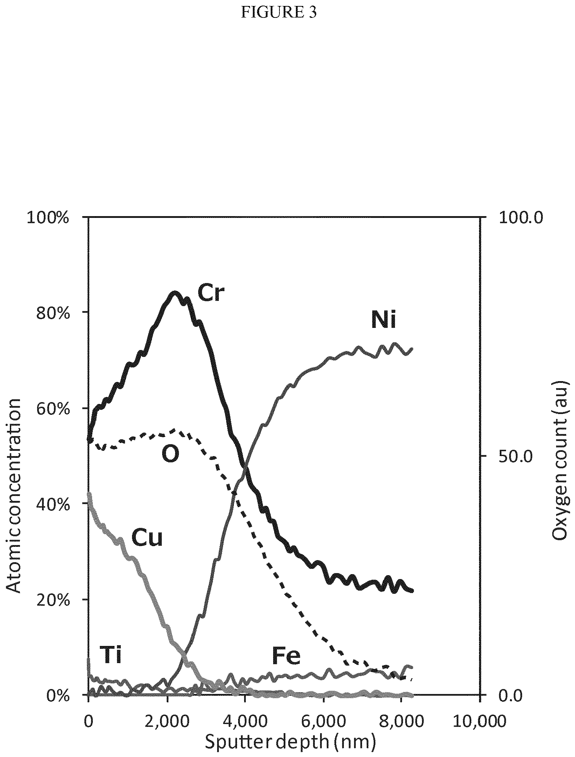

Figures 1 to 3 illustrate concentration profiles for each component excluding O, C and N in the depth direction in Test Nos. 3, 10 and 13, respectively.

[Table 1]

Table 1

| Steel No. | Chemical composition (in mass%, balance: Fe and impurities) | | | | | | | | | | |
|---|---|---|---|---|---|---|---|---|---|---|---|
| | C | Si | Mn | P | S | Cr | Ni | N | O | Mo | Others |
| 1 | 0.070 | 0.21 | 0.95 | 0.020 | <0.001 | 22.5 | 33.5 | 0.060 | 0.010 | - | Ti: 0.5, Al: 0.55 |
| 2 | 0.006 | 0.19 | 0.22 | 0.020 | <0.001 | 23.0 | 46.5 | 0.040 | 0.010 | 5.9 | Cu: 3.01, W: 6.33 |
| 3 | 0.050 | 0.32 | 0.26 | 0.030 | <0.001 | 21.6 | 59.3 | 0.010 | 0.010 | 8.9 | Nb: 3.59 |
| 4 | 0.140 | 0.33 | 0.25 | 0.020 | 0.001 | 22.5 | 44.1 | 0.050 | 0.010 | 3.1 | Cu:2.03 |
| 5 | 0.030 | 0.02 | 0.75 | 0.023 | 0.014 | 15.5 | 54.6 | 0.003 | 0.010 | 16.5 | Co: 2.0, W: 3.8, Al: 0.23 |
| 6 | 0.070 | 0.05 | 0.39 | 0.021 | 0.001 | 21.7 | 50.2 | 0.005 | 0.005 | 8.9 | W: 0.5, B: 0.003 |
| 7 | 0.020 | 0.13 | 0.26 | 0.040 | 0.001 | 23.9 | 45.3 | 0.040 | 0.010 | 5.7 | Cu: 3.56 |
| 8 | 0.007 | 0.13 | 0.35 | 0.030 | 0.001 | 28.1 | 46.0 | 0.040 | 0.010 | 3.5 | Mg: 0.004 |
| 9 | 0.005 | 3.55 | 0.22 | 0.020 | <0.001 | 26.6 | 48.2 | 0.040 | 0.010 | 5.7 | W: 5.7 |
| 10 | 0.008 | 1.65 | 3.20 | 0.020 | <0.001 | 28.9 | 49.5 | 0.002 | 0.005 | 4.7 | Al:0.50 |
| 11 | 0.030 | 0.15 | 0.25 | 0.030 | <0.001 | 12.3 * | 45.0 | 0.030 | 0.010 | - | - |
| 12 | 0.012 | 0.13 | 0.26 | 0.030 | 0.001 | 25.3 | 46.0 | 0.040 | 0.010 | 6.3 | Ca: 0.005 |
| 13 | 0.006 | 0.13 | 0.24 | 0.022 | <0.001 | 26.2 | 45.5 | 0.020 | 0.005 | 5.9 | Ta: 1.38 |
| 14 | 0.007 | 0.13 | 0.30 | 0.016 | 0.001 | 28.2 | 43.3 | 0.040 | 0.010 | 6.1 | Zr: 0.04 |
| 15 | 0.020 | 0.34 | 0.23 | 0.010 | <0.001 | 29.6 | 59.5 | 0.010 | 0.010 | - | Al: 0.14, Ti: 0.25 |

(continued)

| Steel No. | Chemical composition (in mass%, balance: Fe and impurities) | | | | | | | | | | |
|---|---|---|---|---|---|---|---|---|---|---|---|
| | C | Si | Mn | P | S | Cr | Ni | N | O | Mo | Others |
| 16 | 0.020 | 0.25 | 0.33 | 0.012 | <0.002 | 15.7 | 74.9 | 0.002 | - | - | Al: 0.15, Ti: 0.20 |
| * indicates that conditions do not satisfy those defined by the present invention. | | | | | | | | | | | |

[Table 2]

Table 2

| Test No. | Steel No. | Chromium oxide film | | | Highest Cr depth position | | Outer layer | | Corrosion resistance | | SO$_3$ decomposition rate (g/cm$^2$/min) | |
|---|---|---|---|---|---|---|---|---|---|---|---|---|
| | | Method for forming | Type | Thickness (μm) | [Cr]$_P$ (atom%) | [Cu]$_P$+[V]$_P$+[W]$_P$+[Mo]$_P$+[PM]$_P$ (atom%) | [Cr]$_S$ (atom%) | [Cu]$_S$+[V]$_S$+[W]$_S$+[Mo]$_S$+[PM]$_S$ (atom%) | Corrosion loss (mg/cm$^2$/h) | Evaluation | | |
| 1 | 1 | A | Cr$_2$O$_3$ | 2.8 | 98 | 0 | 98 | 0 | 0.0005 | B | 5.0 × 10$^{-5}$ | |
| 2 | 1 | A | Cr$_2$O$_3$ | 5.6 | 97 | 2 | 97 | 2 | 0.0003 | B | 1.0 × 10$^{-4}$ | |
| 3 | 2 | A | Cr$_2$O$_3$ | 2.5 | 98 | 1 | 97 | 1 | 0.0004 | B | 7.5 × 10$^{-4}$ | |
| 4 | 2 | A+B | Pt/Cr$_2$O$_3$ | 3.6 | 95 | 0 | 35 | 65 | <0.0001 | A | 2.3 × 10$^{-3}$ | |
| 5 | 2 | B | MoO$_X$+Cr$_2$O$_3$ | 2.5 | 90 | 4 | 68 | 32 | 0.0001 | B | 2.0 × 10$^{-3}$ | |
| 6 | 2 | B | CuO+Cr$_2$O$_3$ | 1.2 | 60 | 40 | 60 | 40 | 0.0005 | B | 1.6 × 10$^{-3}$ | |
| 7 | 1 | B | CuCr$_4$O$_4$+Cr$_2$O$_3$ | 1.1 | 64 | 33 | 64 | 33 | 0.0002 | B | 2.4 × 10$^{-3}$ | |
| 8 | 1 | A+B | CuCrO$_2$/Cr$_2$O$_3$ | 4.0 | 98 | 2 | 67 | 33 | <0.0001 | A | 3.0 × 10$^{-3}$ | |
| 9 | 1 | A+B | Cu/Cr$_2$O$_3$ | 1.8 | 100 | 0 | 0 | 100 | 0.0001 | B | 2.6 × 10$^{-3}$ | |
| 10 | 15 | A+B | CuO/Cr$_2$O$_3$ | 3.2 | 93 | 2 | 0 | 98 | <0.0001 | A | 5.0 × 10$^{-3}$ | |
| 11 | 15 | A+B | V$_2$O$_5$/Cr$_2$O$_3$ | 2.8 | 100 | 0 | 0 | 100 | 0.0001 | B | 3.5 × 10$^{-3}$ | |
| 12 | 2 | A+B | CuO/Cr$_2$O$_3$ | 2.1 | 94 | 6 | 5 | 95 | <0.0001 | A | 4.9 × 10$^{-3}$ | |
| 13 | 15 | A+B | CuCr$_2$O/Cr$_2$O$_3$ | 4.3 | 85 | 11 | 53 | 42 | <0.0001 | A | 4.3 × 10$^{-3}$ | Inventive example |
| 14 | 16 | B | WO$_X$+Cr$_2$O$_3$ | 2.8 | 90 | 10 | 85 | 15 | 0.0006 | B | 8.5 × 10$^{-4}$ | |
| 15 | 15 | A+B | MoO$_X$/Cr$_2$O$_3$ | 12 | 100 | 0 | 0 | 100 | <0.0001 | A | 4.0 × 10$^{-3}$ | |
| 16 | 3 | A | Cr$_2$O$_3$ | 22 | 100 | 0 | 95 | 0 | <0.0001 | A | 5.0 × 10$^{-3}$ | |
| 17 | 4 | A | Cr$_2$O$_3$ | 20 | 100 | 0 | 97 | 3 | 0.0002 | B | 2.3 × 10$^{-3}$ | |
| 18 | 5 | A | Cr$_2$O$_3$ | 35 | 95 | 2 | 95 | 2 | <0.0001 | A | 4.5 × 10$^{-3}$ | |
| 19 | 6 | A | Cr$_2$O$_3$ | 12 | 100 | 0 | 97 | 3 | 0.0004 | B | 4.0 × 10$^{-3}$ | |
| 20 | 7 | A+B | Pd/Cr$_2$O$_3$ | 27 | 100 | 0 | 5 | 95 | <0.0001 | A | 3.7 × 10$^{-3}$ | |
| 21 | 8 | A | Cr$_2$O$_3$ | 42 | 100 | 0 | 98 | 2 | 0.0001 | B | 1.3 × 10$^{-3}$ | |
| 22 | 9 | B | CuO+Cr$_2$O$_3$ | 4.5 | 65 | 35 | 65 | 35 | <0.0001 | A | 2.8 × 10$^{-3}$ | |
| 23 | 10 | A | Cr$_2$O$_3$ | 16 | 100 | 0 | 100 | 0 | 0.0002 | B | 5.0 × 10$^{-4}$ | |
| 24 | 12 | A | Cr$_2$O$_3$ | 25 | 100 | 0 | 100 | 0 | 0.0004 | B | 9.2 × 10$^{-4}$ | |
| 25 | 13 | A | Cr$_2$O$_3$ | 31 | 100 | 0 | 100 | 0 | 0.0002 | B | 1.1 × 10$^{-3}$ | |
| 26 | 14 | A | Cr$_2$O$_3$ | 1.9 | 100 | 0 | 100 | 0 | 0.0006 | B | 5.0 × 10$^{-4}$ | |

(continued)

| Test No. | Steel No. | Chromium oxide film | | | Highest Cr depth position | | Outer layer | | Corrosion resistance | | $SO_3$ decomposition rate (g/cm$^2$/min) | |
| --- | --- | --- | --- | --- | --- | --- | --- | --- | --- | --- | --- | --- |
| | | Method for forming | Type | Thickness ($\mu$m) | $[Cr]_P$ (atom%) | $[Cu]_P+[V]_P+[W]_P+[Mo]_P+[PM]_P$ (atom%) | $[Cr]_S$ (atom%) | $[Cu]_S+[V]_S+[W]_S+[Mo]_S+[PM]_S$ (atom%) | Corrosion loss (mg/cm$^2$/h) | Evaluation | | |
| 27 | 15 | - | - * | - * | - * | - | - | - | 0.05 | D | $1.0 \times 10^{-5}$ | Comparative example |
| 28 | 2 | A | $Cr_2O_3$ | 55 * | 98 | 2 | 95 | 5 | 0.0012 | D | $3.0 \times 10^{-4}$ | |
| 29 | 11* | A | $Cr_2O_3$ | 3.5 | 74 | 0 | 74 | 0 | 0.08 | D | $8.0 \times 10^{-6}$ | |

* indicates that conditions do not satisfy those defined by the present invention.

The corrosion resistance and catalyc performance were evaluated by the methods described hereunder with respect to the austenitic alloy materials of the present invention obtained as described above.

<Evaluation of corrosion resistance>

A sample cut into a size of 10 mm × 30 mm × 2 mm was placed in a quartz tube for use in a corrosion test, and the sample was heated to 850°C while flowing argon gas. Next, concentrated sulfuric acid was thermally decomposed at 350°C or more to generate $SO_3$ and was mixed with the argon gas, and the mixed gas was circulated as $SO_3$ gas with a concentration of 2% inside the quartz tube. After 1,000 hours elapsed, corrosion loss was measured by means of the difference between the sample weights before and after the test. The corrosion resistance of the alloy pipe was evaluated in an overall manner by also taking into consideration changes in the form of the film as well as the presence or absence of oxidation and intergranular corrosion of the base metal below the film.

<Evaluation of catalytic ability>

A specimen pipe (external diameter of 20 mm, internal diameter of 16 mm, length of 100 mm, inner surface area of 50 cm$^2$) was disposed in a flow system evaluation apparatus, and was heated to 850°C while flowing argon gas through the inside of the specimen pipe. Next, $SO_3$ obtained by thermal decomposition of concentrated sulfuric acid as described above was introduced into and circulated through the inside of the specimen pipe while being mixed with the argon gas.

At such time, the decomposition amount of the concentrated sulfuric acid and the argon gas amount were adjusted so that the reactant gas had a flow rate of 1000 mL/min and the $SO_3$ concentration was 10 vol.%. Based on the conditions of the present test, the $SO_3$ supply rate was 0.0071 g/cm$^2$/min. Evaluation of the reaction was performed by washing the generated gas with an iodine solution, and thereafter measuring the concentration of $O_2$ that was one of the products using a gas chromatograph. Next, the $SO_3$ decomposition rate (g/cm$^2$/min) was calculated by dividing the $SO_3$ decomposition amount per unit time (calculated based on a value obtained by doubling the oxygen amount; g/min) by the area.

The results are shown collectively in Table 2.

As shown in Table 2, in Test Nos. 1 to 26 that satisfied all of the conditions defined by the present invention, the specimens exhibited excellent corrosion resistance. Further, when the respective films were observed, the films were sound and peeling or cracks had not occurred. In addition, the occurrence of corrosion was also not observed in the base metal. Note that, with respect to the corrosion resistance evaluations shown in Table 2, a corrosion loss of less than 0.0001 mg/cm$^2$/h is denoted by "A", a corrosion loss of 0.0001 mg/cm$^2$/h or more and less than 0.001 mg/cm$^2$/h is denoted by "B", a corrosion loss of 0.001 mg/cm$^2$/h or more and less than 0.01 mg/cm$^2$/h is denoted by "C", and a corrosion loss of 0.01 mg/cm$^2$/h or more is denoted by "D". However, in a case where an unsound feature such as a crack was observed in the film, the corrosion resistance was evaluated as "D" even if the loss was small.

Among these results, as will be understood from Table 2, in Test Nos. 4, 8 to 13, 15 and 20 in which a film containing Cu, Mo, W, V or PM was provided on a chromium oxide film, the film was sound, and corrosion was not observed. Further, the $SO_3$ decomposition rate increased significantly compared to a case where a $Cr_2O_3$ film was solely provided. It is considered that the corrosion resistance improved because a decomposing property with respect to $SO_3$ at the film surface was promoted by the laminated film.

Further, in Test Nos. 5 to 7, 14 and 22 in which an oxide of Cu, Mo or W was contained in the chromium oxide film, irrespective of the fact that the film thickness was relatively thin, excellent corrosion resistance was confirmed. Although these oxides have a catalytic activity for decomposition of $SO_3$ similarly to $Cr_2O_3$, a high $SO_3$ decomposition rate was obtained that was similar for each film.

In contrast to the test results described above, in Test No. 27 in which a chromium oxide film was not formed, the result showed that the corrosion resistance was inferior. Further, in Test No. 28 in which the thickness of the chromium oxide film was more than the range defined in the present invention, although the corrosion loss was not so large, a large crack occurred in the film, and corrosion progressed in a manner that used the large crack as a starting point. In addition, in Test No. 29 in which the Cr concentration of the base metal was less than the value defined by the present invention, corrosion loss was high and peeling of the film was observed.

INDUSTRIAL APPLICABILITY

According to the present invention, an austenitic alloy material and an austenitic alloy pipe that exhibit excellent corrosion resistance in a high temperature and harsh environment containing a sulfur oxide such as sulfuric acid or a hydrogen halide or the like can be obtained.

**Claims**

1. An austenitic alloy material comprising a base metal having a surface, and a film containing chromium oxide having a thickness of 0.1 to 50 $\mu$m on at least one portion of the surface, wherein:

   a chemical composition at a depth position in the film at which a Cr concentration is highest contains, by atom%, 50% or more of Cr as a proportion occupied among components excluding O, C and N; and
   a chemical composition of the base metal consists of, by mass%:

   C: 0.001 to 0.6%,
   Si: 0.01 to 5.0%,
   Mn: 0.1 to 10.0%,
   P: 0.08% or less,
   S: 0.05% or less,
   Cr: 15.0 to 55.0%,
   Ni: 30.0 to 80.0%,
   N: 0.001 to 0.25%,
   O: 0.02% or less,
   Mo: 0 to 20.0%,
   Cu: 0 to 5.0%,
   Co: 0 to 5.0%,
   W: 0 to 10.0%,
   Ta: 0 to 6.0%,
   Nb: 0 to 5.0%,
   Ti: 0 to 1.0%,
   B: 0 to 0.1%,
   Zr: 0 to 0.1%,
   Hf: 0 to 0.1%,
   Al: 0 to 1.0%,
   Mg: 0 to 0.1%,
   Ca: 0 to 0.1%, and
   the balance: Fe and impurities.

2. The austenitic alloy material according to claim 1, wherein the chemical composition of the base metal contains, by mass%, one or more elements selected from:

   Mo: 0.01 to 20.0%,
   Cu: 0.01 to 5.0%,
   Co: 0.01 to 5.0%,
   W: 0.01 to 10.0%,
   Ta: 0.01 to 6.0%,
   Nb: 0.01 to 5.0%,
   Ti: 0.01 to 1.0%,
   B: 0.001 to 0.1%,
   Zr: 0.001 to 0.1%,
   Hf: 0.001 to 0.1%,
   Al: 0.01 to 1.0%,
   Mg: 0.0005 to 0.1%, and
   Ca: 0.0005 to 0.1%.

3. The austenitic alloy material according to claim 1 or claim 2, wherein:
   one or more elements selected from Cu, V, W, Mo and precious metal elements is contained in the film.

4. The austenitic alloy material according to any one of claim 1 to claim 3, wherein:
   a chemical composition in an outer layer of the film satisfies formulas (i) and (ii) below:

$$[Cu]_S+[V]_S+[W]_S+[Mo]_S+[PM]_S \geq 30 \quad \dots (i)$$

$$[Cr]_S \leq 70 \quad \dots (ii)$$

where, with respect to each symbol in the formulas above, each element in the outer layer of the film represents a proportion (atom%) occupied by the corresponding element among components excluding O, C and N, and PM means precious metal elements.

5. The austenitic alloy material according to any one of claim 1 to claim 4, wherein:
the chemical composition at a depth position at which the Cr concentration is highest satisfies formula (iii) below:

$$0.5 \leq [Cu]_P+[V]_P+[W]_P+[Mo]_P+[PM]_P \leq 50 \quad \dots (iii)$$

where, with respect to each symbol in the above formula, each element at a depth position at which the Cr concentration is highest represents a proportion (atom%) occupied by the corresponding element among components excluding O, C and N, and PM means precious metal elements.

6. The austenitic alloy material according to any one of claim 1 to claim 5, wherein:
the film contains a complex oxide containing one or more elements selected from Cu, V, W and Mo, and Cr.

7. The austenitic alloy material according to any one of claim 1 to claim 6, wherein:
the film has an action that decomposes $SO_3$.

8. The austenitic alloy material according to any one of claim 1 to claim 7, wherein:
an $SO_3$ decomposition rate is $8.0 \times 10^{-5}$ g/cm$^2$/min or more under conditions of an $SO_3$ supply rate per unit area of 0.0071 g/cm$^2$/min, and a reaction temperature of 850°C.

9. The austenitic alloy material according to any one of claim 1 to claim 8, wherein:
an $SO_3$ decomposition rate is $1.0 \times 10^{-3}$ g/cm$^2$/min or more under conditions of an $SO_3$ supply rate per unit area of 0.0071 g/cm$^2$/min, and a reaction temperature of 850°C.

10. An austenitic alloy pipe comprising an austenitic alloy material according to any one of claim 1 to claim 9.

FIGURE 1

FIGURE 2

FIGURE 3

## INTERNATIONAL SEARCH REPORT

| | International application No. |
|---|---|
| | PCT/JP2017/023824 |

A.  CLASSIFICATION OF SUBJECT MATTER
$C23C8/18(2006.01)i$, $B01J23/26(2006.01)i$, $B01J23/28(2006.01)i$, $B01J23/652$
$(2006.01)i$, $B01J23/86(2006.01)i$, $C22C19/05(2006.01)i$, $C22C30/02(2006.01)i$,
$C23C18/12(2006.01)i$, $C23C18/38(2006.01)i$, $C23C28/00(2006.01)i$,
According to International Patent Classification (IPC) or to both national classification and IPC

B.  FIELDS SEARCHED

Minimum documentation searched (classification system followed by classification symbols)
C23C8/18, B01J23/26, B01J23/28, B01J23/652, B01J23/86, C22C19/05,
C22C30/02, C23C18/12, C23C18/38, C23C28/00, C23C28/04

Documentation searched other than minimum documentation to the extent that such documents are included in the fields searched
Jitsuyo Shinan Koho          1922–1996     Jitsuyo Shinan Toroku Koho    1996–2017
Kokai Jitsuyo Shinan Koho    1971–2017     Toroku Jitsuyo Shinan Koho    1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2003-239060 A (Sumitomo Metal Industries, | 1-2,7,10 |
| Y | Ltd.), | 3-10 |
| | 27 August 2003 (27.08.2003), | |
| | claims; paragraphs [0001] to [0078]; fig. 6 | |
| | & US 2004/0103963 A1 | |
| | claims; paragraphs [0001] to [0112]; fig. 6 | |
| | & WO 2003/069011 A1      & EP 1475451 A1 | |
| | & KR 10-0567679 B1       & AU 2003207059 A | |
| Y | JP 2007-262558 A (JFE Steel Corp.), | 3-10 |
| | 11 October 2007 (11.10.2007), | |
| | claims; paragraphs [0001] to [0014], [0022], | |
| | [0034] to [0049] | |
| | (Family: none) | |

☐  Further documents are listed in the continuation of Box C.          ☐  See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered    to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 21 July 2017 (21.07.17) | 01 August 2017 (01.08.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2017/023824

Continuation of A. CLASSIFICATION OF SUBJECT MATTER
 (International Patent Classification (IPC))

*C23C28/04*(2006.01)i

         (According to International Patent Classification (IPC) or to both national
         classification and IPC)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005048284 A

**Non-patent literature cited in the description**

- **NOBUYUKI TANAKA et al.** *ZAIRYO-TO-KANKYO,* 2006, vol. 55, 320-324